# DEMANDE DE BREVET EUROPEEN

(11) **EP 0 953 369 A1**
(43) Date de publication de la demande: **03.11.1999**
(21) Numéro de dépôt: 99410039.4
(22) Date de dépôt: 27.04.1999
(51) Int. Cl.: A63F 9/22

(54) **Dispositif de jeu à affichage LCD agencé dans un coffret à surprise**

(30) Priorité: 27.04.1998 FR 9805580
(71) Demandeur: Selliez, Jean Luc, 73610 Attignat-Oncin (FR)
(72) Inventeur: Selliez, Jean Luc, 73610 Attignat-Oncin (FR)
(74) Mandataire: Hecké, Gérard

(57) **Abrégé**

L'invention concerne un nouveau jouet agencé selon un petit coffret constitué par un boîtier (1) et un couvercle (7) ; Le coffret comporte un jeu électronique ayant un écran (13) à affichage LCD à cristaux liquides, un clavier à touches (14) pour l'entrée des paramètres dans un circuit de traitement à microprocesseur (15), un premier compartiment pour le logement des piles (2) d'alimentation, et un deuxième compartiment pour le logement d'un objet surprise. Des moyens de verrouillage sont susceptibles de se trouver dans une position de verrouillage pour le blocage du couvercle (7) dans la position fermée, ou dans une position de déverrouillage pour assurer le déblocage dudit couvercle (7), le passage vers la position de déverrouillage étant subordonné au succès de l'utilisateur dans le résultat obtenu à la fin du jeu électronique, et/ou à la saisie par l'utilisateur d'un code secret sur le clavier à touches (14). L'utilisateur a accès à l'objet secret lorsque le couvercle est débloqué. L'objet secret est un cadeau à découvrir ou un petit objet personnel pour enfant.

## Description

### Domaine de l'invention

La présente invention concerne un nouveau produit pour jouer ou amuser les enfants. Il est relatif à un dispositif de jeu agencé dans un coffret comprenant un boîtier et un couvercle déplaçable entre une position ouverte d'accès à l'intérieur du coffret, et une position fermée d'obturation.

### Etat de la technique

Les jeux électroniques portables traditionnels sont constitués d'un boîtier en matière plastique contenant les piles, les microprocesseurs et les cassettes de jeux, et d'un écran à cristaux liquides avec quelques touches de commande installées sur le dessus du boîtier.

Les cadeaux à objets surprises ou objets secrets traditionnels sont constitués, soit de pochettes en papier ou en plastique, soit d'oeufs en chocolat contenant de petits jouets ou objets divers.

### Objet de l'invention

Le produit selon l'invention permet d'une part de combiner le cadeau surprise avec le jeu électronique qui conditionne l'obtention du cadeau, et d'autre part d'utiliser ultérieurement la boîte comme un petit coffre fort jouet avec code d'accès.

Le dispositif de jeu selon l'invention comporte :
- un jeu électronique ayant un écran à affichage LCD à cristaux liquides,
- un clavier à touche pour l'entrée des paramètres dans un circuit de traitement à microprocesseur,
- un premier compartiment pour le logement des piles d'alimentation,
- un deuxième compartiment pour le logement d'un objet surprise,
- et des moyens de verrouillage susceptibles de se trouver dans une position de verrouillage pour le blocage du couvercle dans la position fermée, ou dans une position de déverrouillage pour assurer le déblocage dudit couvercle, le passage vers la position de déverrouillage étant subordonné au succès de l'utilisateur dans le résultat obtenu à la fin du jeu électronique, et/ou à la saisie par l'utilisateur d'un code secret sur le clavier à touches.

Selon une caractéristique de l'invention, les moyens de verrouillage comportent un pêne à commande électrique piloté par le microprocesseur, un bouton-poussoir manuel équipé d'un pêne mécanique pour maintenir le couvercle bloqué dans la position fermée sous l'action d'un premier ressort de rappel, ledit pêne à commande électrique étant destiné à verrouiller le bouton-poussoir sous l'action d'un deuxième ressort de rappel. Un relais peut alimenter par le microprocesseur pour déverrouiller le pêne à commande électrique en cas de succès au jeu, ou à la reconnaissance du code secret.

Un interrupteur marche-arrêt général est intégré dans la paroi du boîtier, et permet la mise en marche de l'appareil alimenté par les piles.

Le couvercle du boîtier est construit dans la même matière que le boîtier, et comprend sur le dessus l'écran à cristaux liquides, le clavier à touches.

Dans la double paroi du couvercle est intégré l'ensemble des composants électroniques nécessaires au fonctionnement du jeu électronique lui-même, et du clavier et le relais d'ouverture du pêne à commande électrique 10.

Le boîtier et son couvercle articulé à charnière sont reliés par une nappe de fils conducteurs flexibles. Ces fils conducteurs permettent d'une part d'alimenter en courant électrique le jeu électronique placé dans le couvercle à partir des piles placées dans le boîtier, et d'autre part de transmettre le signal d'ouverture au pêne à commande électrique depuis le relais placé dans le couvercle.

Selon une variante non illustrée, le bouton poussoir manuel peut-être éliminé. Dans ce cas le pêne à commande électrique actionné par le relais, assure lui-même le blocage ou le déblocage du couvercle muni d'un ergot qui pénètre dans une fente du boîtier.

Selon une variante non illustrée, le logement pour les piles peut être intégré dans le couvercle.

Selon une variante non illustrée, le jeu électronique peut être intégré sur le dessus du boîtier lui-même. Le boîtier est alors sur le dessus et le couvercle en dessous. Le couvercle est alors simplifié, car il ne nécessite plus de double paroi et d'alimentation électrique.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:

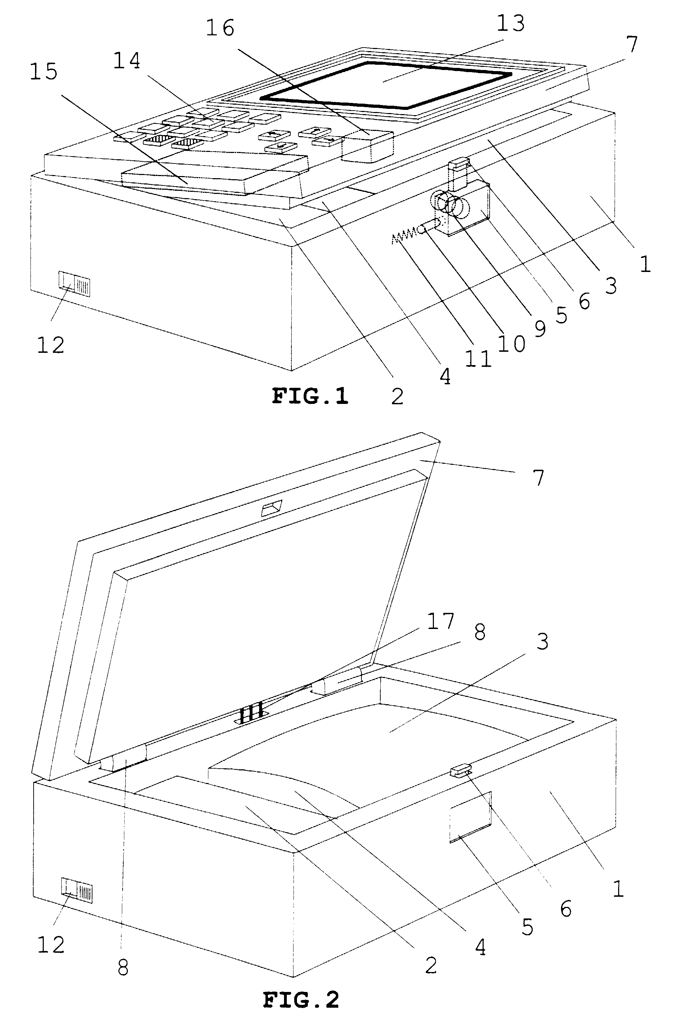

- la figure 1 représente une vue en perspective du coffret selon l'invention, le couvercle étant montré entrouvert ;
- la figure 2 est une vue identique de la figure 1, le coffret étant ouvert ;

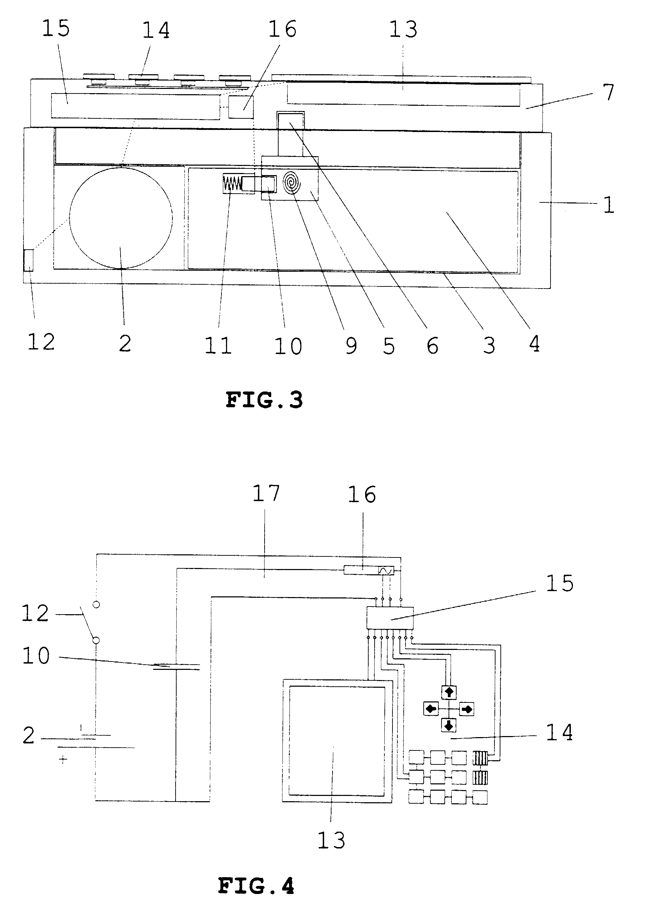

- la figure 3 est une vue en coupe verticale du coffret de la figure 1 en position fermée ;
- la figure 4 représente le schéma électrique du dispositif;
- la figure 5 représente l'écran à cristaux liquides dans le mode labyrinthe avec la ligne virtuelle du point A au point B tracée en pointillés, et telle que générée aléatoirement par le microprocesseur;
- la figure 6 représente l'écran à cristaux liquides avec les lignes brisées affichées sauf sur le passage de la ligne virtuelle ;
- la figure 7 représente l'écran à cristaux liquides avec le parcours à franchir du point A au point B.

### Description d'un mode de réalisation préférentiel

En référence aux dessins, le dispositif comporte un boîtier (1) ayant un premier compartiment pour le logement des piles (2), et un deuxième compartiment (3) réservé à l'objet secret (4). Le boîtier (1) peut être obturé par un couvercle (7) monté à pivotement en étant articulé par des charnières (8).

Dans la double paroi latérale du boîtier (1) est intégré un bouton poussoir manuel (5) dont le pêne mécanique (6) permet le blocage du couvercle (7) lorsque le bouton poussoir (5) est en position de rappel, sous l'effet d'un premier ressort de rappel (9). Un pêne à commande électrique (10) permet le blocage du bouton-poussoir manuel (5) sous l'effet d'un deuxième ressort de rappel (11). Le retrait du pêne à commande électrique (10) est actionné par un relais (16) lorsque ce dernier se trouve dans un état actif pour assurer le déblocage du bouton-poussoir manuel (5) sous la commande du microprocesseur (15).

Un interrupteur général de marche-arrêt (12) est intégré dans la double paroi du boîtier (1). La partie supérieure du couvercle (7) comprend un écran LCD à cristaux liquides (13), un clavier à touches (14) pour l'entrée de paramètres, comprenant à titre d'exemple dix chiffres, quatre touches de directions, et deux touches de commande.

Dans la double paroi du couvercle (7) est intégré le microprocesseur de jeu (15) connecté électriquement à l'écran à cristaux liquides (13), au clavier à touches (14), et au relais (16) d'actionnement du pêne à commande électrique (10).

Le boîtier (1) et son couvercle (7) sont reliés par une nappe de fils conducteurs flexibles (17) pour alimenter le microprocesseur (15) depuis le premier logement des piles (2), et le relais (16). A titre d'exemple non limitatif, le coffret aura des dimensions de l'ordre de 15 cm de longueur, 10 cm de largeur et 5 cm de hauteur.

Le coffret selon l'invention est particulièrement destiné aux jouets pour enfants, aux cadeaux surprises et offres promotionnelles. Les objets secrets ou surprises peuvent être inclus dans le coffret directement par le fabricant du coffret. Les coffrets vides peuvent aussi être vendus à des tiers qui incluent dans le coffret leurs propres cadeaux promotionnels ou des objets divers. Dans ce cas, le bouton-poussoir reste en position ouverte. Lors de la première utilisation, le code secret est livré avec le coffret et peut être ensuite modifié par l'utilisateur final.

Atitre d'exemple non limitatif, les objets et cadeaux à inclure dans le coffret peuvent être des petits objets promotionnels personnalisés, des petits livres d'histoires pour enfants, livres de jeux, livres de pensées, livre vierge à remplir soi-même pour son journal secret, bijoux fantaisie, pierres semi-précieuses, poupées, flacons de parfum, pièces de monnaie, médailles, talisman, des petits objets à monter soi-même, petites voitures, images et photos, mini-jeux, et autres objets divers.

Le produit comporte selon une deuxième caractéristique un jeu à affichage à cristaux liquides nécessitant l'obtention d'un score ou d'un résultat positif. Il suffit de pré-charger le microprocesseur avec le programme de jeu correspondant.

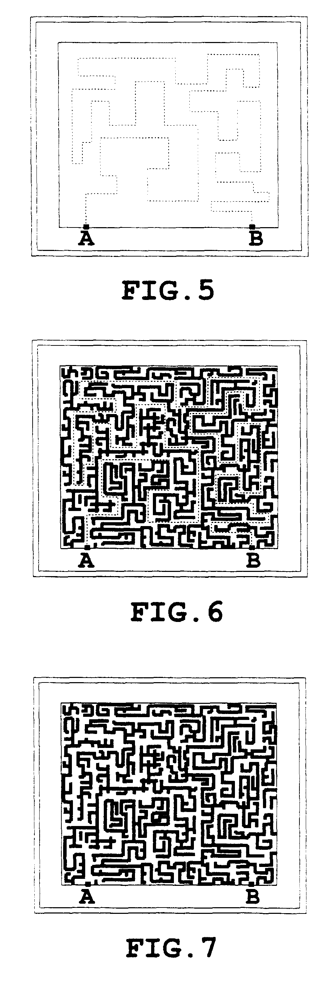

Le programme de jeu pré-chargé dans le microprocesseur 15 peut-être à titre d'exemple un jeu de labyrinthe à génération de parcours aléatoire. A chaque fois que le jeu est mis en marche, un nouveau parcours est reconfiguré sur l'écran à cristaux liquides 13. Ceci permet de conserver au produit un intérêt renouvelé. Le calcul aléatoire du parcours est effectué par le microprocesseur 15. Une ligne représentant ce parcours est affichée de manière virtuelle sur l'écran d'un point A à un point B ( figures 5-7). Simultanément, un ensemble de lignes brisées ou de formes diverses s'affiche sur l'écran LCD 13, de manière contrôlée par le microprocesseur, sauf sur le parcours de la ligne virtuelle déterminant ainsi le labyrinthe à franchir.

Le but du jeu de labyrinthe est de trouver le chemin du point A au point B en faisant se déplacer un curseur sur l'écran depuis le point A, à l'aide des touches de direction du clavier 14.

Une horloge est avantageusement intégrée dans le microprocesseur 15 de manière à afficher le temps passé sur l'écran à cristaux liquides 13, et ainsi chronométrer le jeu pour ajouter le paramètre de temps maximum imparti pour atteindre le point B.

Le fonctionnement de l'ensemble est le suivant:
Au repos, les piles 2 sont insérées dans le premier compartiment du boîtier 1, et le couvercle 7 du boîtier est bloqué en position de verrouillage par le pêne mécanique 6 du bouton poussoir 5, lui-même bloqué par le pêne à commande électrique 10.
Le dispositif est mis en position marche par l'intermédiaire de l'interrupteur marche-arrêt 12. Le jeu électronique est alors amorcé et s'affiche sur l'écran à cristaux liquides 13. Lorsque le résultat du jeu est positif dans le cas du labyrinthe, ou atteint un score prédéterminé dans le cas de tout autre jeu électronique, une demande de code secret à chiffres s'affiche alors sur l'écran à cristaux liquides 13. Le code secret prédéterminé est entré à l'aide du clavier 14

Si le code entré est incorrect, rien ne se passe, et le couvercle reste en position fermée. Si le code entré est correct, le relais 16 commande le retrait du pêne à commande électrique 10 pour débloquer le bouton-poussoir 5. Le bouton-poussoir 5 est alors libre de mouvement, et peut être pressé manuellement pour libérer le couvercle 7 qui peut alors s'ouvrir en donnant accès au deuxième compartiment contenant l'objet secret.

Lorsque le couvercle 7 est ouvert avec le pêne à commande électrique 10 en position de retrait, il est possible de changer le code secret à l'aide des touches du clavier 14.

Lorsque le couvercle 7 est refermé manuellement, le premier ressort de rappel 9 ramène le bouton poussoir 5 en position fermée, mais le pêne à commande électrique 10 reste en position de retrait. Il est donc possible de rouvrir le couvercle 7 à ce moment.

Si l'appareil est mis en position arrêt à l'aide de l'interrupteur marche-arrêt 12, le pêne à commande électrique 10 revient en position de blocage sous l'effet du deuxième ressort de rappel 11. Le bouton poussoir 5 manuel ne peut plus être pressé, et le couvercle 7 reste fermé. Il faut alors recommencer le cycle complet pour l'ouverture du coffret.

Selon des modes particuliers de réalisation, les modalités d'ouverture et de fermeture du coffret et de modification du code secret peuvent être différents de ceux indiqués dans ce document.

## Revendications

1. Dispositif de jeu agencé dans un coffret comprenant un boîtier (1) et un couvercle (7) déplaçable entre une position ouverte d'accès à l'intérieur du coffret, et une position fermée d'obturation, caractérisée en ce qu'il comporte :
- un jeu électronique ayant un écran (13) à affichage LCD à cristaux liquides,
- un clavier à touches (14) pour l'entrée des paramètres dans un circuit de traitement à microprocesseur (15),
- un premier compartiment pour le logement des piles (2) d'alimentation,
- un deuxième compartiment pour le logement d'un objet surprise,
- et des moyens de verrouillage susceptibles de se trouver dans une position de verrouillage pour le blocage du couvercle (7) dans la position fermée, ou dans une position de déverrouillage pour assurer le déblocage dudit couvercle (7), le passage vers la position de déverrouillage étant subordonné au succès de l'utilisateur dans le résultat obtenu à la fin du jeu électronique, et/ou à la saisie par l'utilisateur d'un code secret sur le clavier à touches (14).

2. Dispositif de jeu selon la revendication 1, caractérisé en ce que les moyens de verrouillage comportent un pêne à commande électrique (10) piloté par le microprocesseur (15).

3. Dispositif de jeu selon la revendication 2, caractérisé en ce que les moyens de verrouillage comportent de plus :
- un bouton-poussoir (5) manuel équipé d'un pêne mécanique (6) pour maintenir le couvercle (7) bloqué dans la position fermée sous l'action d'un premier ressort de rappel (9), ledit pêne à commande électrique (10) étant destiné à verrouiller le bouton-poussoir (5) sous l'action d'un deuxième ressort de rappel (11),
- et un relais (16) alimenté par le microprocesseur (15) pour déverrouiller le pêne à commande électrique (10) en cas de succès au jeu, ou à la reconnaissance du code secret.

4. Dispositif de jeu selon l'une quelconque des revendications 1 à 3, caractérisé en ce que le jeu électronique est intégré sur le dessus du couvercle (7).

5. Dispositif de jeu selon l'une quelconque des revendications 1 à 4, caractérisé en ce que le déverrouillage du couvercle (7) autorise l'accès au deuxième compartiment renfermant l'objet surprise.

6. Dispositif de jeu selon l'une quelconque des revendications précédentes caractérisé en ce que le microprocesseur (15) est pré-chargé par un programme de jeu nécessitant l'obtention d'un score ou d'un résultat positif permettant d'arriver au succès.

7. Dispositif de jeu selon l'une quelconque des revendications précédentes caractérisé en ce que le microprocesseur (15) est pré-chargé par un jeu de labyrinthe à génération de parcours aléatoire et reconfiguré à chaque mise sous tension.

8. Dispositif de jeu selon l'une quelconque des revendications précédentes caractérisé en ce que le coffret renferme un interrupteur marche-arrêt (12) pour la mise en marche du jeu.
